# NEUE EUROPÄISCHE PATENTSCHRIFT

(11) **EP 0 111 046 B2**
(45) Veröffentlichungstag und Bekanntmachung des Hinweises auf die Entscheidung über den Einspruch: **10.02.1993**
(45) Hinweis auf die Patenterteilung: 07.09.1988
(21) Anmeldenummer: 83105624.7
(22) Anmeldetag: 08.06.1983
(51) Int. Cl.: B23Q 3/157

(54) **Werkzeugwechseleinrichtung für eine Vielspindelwerkzeugmaschine**
Tool changing apparatus for multiple spindle machine tools
Dispositif de changement d'outil pour une machine-outil à broches multiples

(30) Priorität: 16.11.1982 DE 3242439
(43) Veröffentlichungstag der Anmeldung: 20.06.1984
(73) Patentinhaber: Alfing Kessler Sondermaschinen GmbH, D-73413 Aalen (DE)
(72) Erfinder: Fischer, Peter, Dipl.-Ing., D-7080 Aalen (DE); Schubert, Paul, Ing., D-7080 Aalen (DE)
(74) Vertreter: Füchsle, Klaus, Dipl.-Ing.

(56) Entgegenhaltungen:
- EP-A- 0 000 138
- EP-A- 0 003 027
- DE-A- 1 920 275
- DE-A- 2 060 957
- DE-A- 2 651 096
- DE-A- 2 811 357
- DE-A-20 262 21
- JP-A-53 080 874
- JP-A-53 080 875
- US-A- 3 431 633
- US-A- 3 646 664

## Beschreibung

Die vorliegende Erfindung betrifft eine Werkzeugmaschine zur Anordnung auf einer Seiten- oder Konsoleinheit einer Transfermaschine, mit einer Spindeleinheit mit einer Anzahl von Bearbeitungsspindeln, mit Antriebselementen für die Spindeleinheit, sowie einer Werkzeugwechseleinrichtung, welche einen Werkzeugträger zur Aufnahme der gebrauchten und der neuen Werkzeuge aufs<eist, der aus einer Bestückungsstellung in eine Wechselstellung vor den Bearbeitungsspindeln bewegbar ist.

Solche Werkzeugmaschinen mit einer Anzahl von Bearbeitungsspindeln, d.h. solche für sogenannte Vielspindelwerkzeugmaschinen, sind bekannt. Sie haben die Aufgabe, einen Satz nebeneinander angeordneter, von getrennten Spindeln angetriebener Werkzeuge (beispielsweise Bohr-, Senk-, Gewindeschneid-, Feinbohr- oder ähnliche Werkzeuge) automatisch gleichzeitig abzunehmen und durch einen anderen neuen Satz zu ersetzen.

Bei bekannten Werkzeugmaschinen dieser Art (vgl. DE-AS 1 920 275) ist der werkzeugträger als um seine Längsachse drehbarer Arm ausgebildet, der an seinem einen Ende um eine vertikale, neben der Werkzeugmaschine liegende Achse schwenkbar ist. DerArm trägt zwei Reihen von Werkzeugaufnahmen, die in bezug auf die Drehachse um 90° zueinander versetzt angeordnet und jeweils zur Aufnahme der zu entnehmenden (erste Reihe) und der neuen Werkzeuge (zweite Reihe) eingerichtet sind.

Zur Verlagerung des Armes aus derwechselstellung von den Bearbeitungsspindeln in die Bestückungsstellung neben der Werkzeugmaschine wird der Arm um die neben der Werkzeugmaschine liegende vertikale Achse um etwa 90° geschwenkt. Da der Arm bei dieser Schwenkbewegung eine relativ große Fläche überstreicht, benötigen derartige bekannte Werkzeugwechseleinrichtungen relativ viel Raum gerade in demjenigen Bereich, in dem aufgrund des Anschlusses der Seiten- bzw. Konsoleinheit an die Mitteneinheit der Transfermaschine beengte Platzverhältnisse vorliegen. Zudem befindet sich der Arm mit den Werkzeugaufnahmen in der Bestückungsstellung neben der Seiten- bzw. Konsoleinheit relativ nahe an der Mitteneinheit, so daß die Entnahme der ausgewechselten Werkzeuge und die Bestückung mit neuen Werkzeugen in dem Raum zwischen zwei Seiten- bzw. Konsoleinheiten durchgeführt werden muß, wodurch wegen der beengten Platzverhältnisse für die Anordnung der benachbarten Seiten- bzw. Konsoleinheit nicht der nach der DIN-Norm kleinstmögliche Abstand zur benachbarten Seiten- bzw. Konsoleinheit gewählt werden kann. Die Notwendigkeit, bei mit derartigen Werkzeugmaschinen ausgestatteten Werkzeugmaschinen jeweils größere Abstände zwischen den Seiten- bzw. Konsoleinheiten vorsehen zu müssen, führt zu relativ langen Transfermaschinen und damit zu einer Verteuerung der Bearbeitungsstraße und einer Erhöhung des Raumbedarfes.

Aufgabe der vorliegenden Erfindung ist es, eine Werkzeugwechsel-Einrichtung der gattungsgemäßen Art für eine auf einer Seiten- oder Konsoleinheit angeordnete Werkzeugmaschine zu schaffen, die selbst dann eine problemlose Entnahme der Werkzeuge zuläßt, wenn die Seiten- bzw. Konsoleinheiten in dem nach der DIN-Norm geringstmöglichen Abstand nebeneinander angeordnet sind.

Diese Aufgabe wird dadurch gelöst, daß der Werkzeugträger an den freien Enden von zwei jeweils an den Seiten der Werkzeugmaschine angeordneten Armen befestigt ist, deren andere Enden um eine waagerechte, senkrecht zu den Achsen der Bearbeitungsspindeln verlaufende Achse derartverschwenkbar sind, daß der Werkzeugträger aus einer Bestückungsstellung auf der Rückseite der Werkzeugmaschine über deren Spindeleinheit und die zugehörigen Antriebselemente hinweg in die Wechselstellung vor den Bearbeitungsspindeln bewegbar ist.

Durch die erfindungsgemäßen Merkmale ist erstmalig eine Werkzeugwechseleinrichtung geschaffen, bei der der Werkzeugträger aus seiner Wechselstellung vor den Bearbeitungsspindeln nicht wie bisher seitlich neben die Werkzeugmaschine, sondern über deren Spindeleinheit und den zugehörigen Antriebselementen hinweg in die auf der Rückseite der Werkzeugmaschine angeordnete Bestückungsstellung geschwenkt wird.

Diese Arbeitsweise hat den Vorteil, daß die Entnahme der ausgewechselten Werkzeuge und die Bestückung mit neuen Werkzeugen nicht wie bisher in dem schmalen Gang zwischen zwei Seiten- oder Konsoleinheiten durchgeführt werden muß, sondern von der Rückseite der Werkzeugmaschine her erfolgen kann, auf der stets genügend Raum zur Verfügung steht. In den Bereich der Rückseite können die Werkzeuge in herkömmlicher Weise über Werkzeugwagen oder über automatische Transportsysteme gefördert und von dort manuell oder automatisch in den Werkzeugträger verbracht oder aus diesem entnommen werden. Im Falle einer manuellen Bestückung ist es dabei nicht erforderlich, daß sich die Bedienungsperson in den beengten Raum zwischen den Seiten-und Konsoleinheiten zweier benachbarter Werkzeugmaschinen und damit in den Gefahrenbereich der Werkzeuge und Werkzeugspindeln begibt. Die Bedienungsperson kann daherdie Entnahme derausgewechselten Werkzeuge und die Bestückung mit neuen Werkzeugen in einem Bereich vornehmen, der relativ weit entfernt von rotierenden Teilen und Werkzeugen und deshalb vollkommen sicher ist.

Die erfindungsgemäße Ausgestaltung ermöglicht ferner eine Konstruktion, bei der im Gegensatz zu bekannten Konstruktionen im Bereich vor und neben den Werkzeugen und den Bearbeitungsspindeln in der Bearbeitungsphase der Werkzeugmaschine keinerlei Teile oderAggregate derwerkzeugwechseleinrichtung liegen. Dies bedeutet, daß der kritische und beengte Raum im Anschlußbereich der Seiten- bzw. Konsoleinheiten an die Mitteleinheit frei von jeglichen Vorrichtungsteilen bleibt. so daß der Gestaltungsspielraum für den Konstrukteur von Werkzeugmaschinen für Transfermaschinen gegenüber herkömmlichen Lösungen nicht eingeengt ist.

Bei Konstrvktionen, bei denen die Werkzeugträger an veschwenkbaren Armen befestigt sind, ist es vorteilhaft, daß die verschwenkbare Lagerung der Arme in jeweils neben der Werkzeugmaschine angeordneten Lagerböcken eingebaut ist. Damit wird die Lagerung der Werkzeugwechseleinrichtung bei konstrvktiv einfachem Aufbau vollkommen unabhängig von der Werkzeugmaschine, die unbeeinflußt von Teilen der Werkzeugwechseleinrichtung zwischen den Lagerböcken auf den Schlitteneinheiten hin- und herverschoben werden kann.

Im Falle des Einsatzes von Lagerböcken zur Aufnahme der Lagerung für die Arme ist es vorteilhaft, daß die Lagerböcke über eine zwischenplattenförmige Anpaßeinheit befestigt sind. Durch eine derartige Ausgestaltung ist eine Veränderung der als Normelemente ausgeführten Seiten- oder Konsoleinheiten zur Aufnahme der Lagerböcke nicht erforderlich.

Grundsätzlich ist es möglich, die Verschwenkbewegung der Arme auf verschiedenste Weise vorzunehmen. Besonders zweckmäßig ist es jedoch, wenn jeder Arm einen eigenen Schwenkantrieb aufweist und die Schwenkantriebe über eine starre Welle miteinander verbunden sind. Die Anordnung von zwei getrennten Schwenkantrieben hat den Vorteil, daß diese kleiner ausgebildet und deshalb platzsparender an den Seiten der Werkzeugmaschine angeordnet werden können. Der Synchronlauf der beiden Schwenkantriebe wird dabei durch die starre Welle gewährleistet.

Die Ausrichtung des Werkzeugträgers in der Wechselstellung kann auf verschiedenste Weise erfolgen. Vorteilhaft ist es. die Ausrichtung in zwei Schritten vorzunehmen, d. h. zuerst eine Grob- und im Anschluß daran eine Feinausrichtung vorzusehen.

Zur Grobausrichtung ist es zweckmäßig, an den Lagerböcken einstellbare Anschläge vorzusehen, die mit Anschlagflächen an den Armen zusammenwirken. Eine derartige Ausgestaltung ist konstruktiv einfach und betriebssicher. Zur Feinausrichtung wiederum ist es vorteilhaft, daß miteinander korrespondierende Führungseinrichtungen vorgesehen werden, die einerseits an dem Werkzeugträger und andererseits an der Spindeleinheit befestigt sind. Durch eine derartige Anordnung können Spiele an den Halteeinrichtungen für den Werkzeugträger oder der Schlitteneinheit der Werkzeugmaschine keinen Einfluß auf die Feinausrichtung ausüben, da derWerkzeugträger über die Führungseinrichtungen direkt an der Spindeleinheit zentriert wird.

Zweckmäßig ist es in einem solchen Falle, daß die Führungseinrichtung Führungsstangen aufweist, die mit Führungsbüchsen zusammenwirken. Derartige Führungseinrichtungen sind bewährt und auch noch nach langem Gebrauch zuverlässig.

Bei einem bevorzugten Ausführungsbeispiel sind die Führungsstangen an der Seite der Spindeleinheit parallel zu den Spindeln angeordnet und derart bemessen, daß sie in der Werkzeugübergabestellung in die in den Werkzeugträger angeordneten Führungsbüchsen hineinragen. Eine derartige Ausgestaltung hat den Vorteil, daß die Feinausrichtung automatisch dann erfolgt, wenn sich die Spindeleinheit in die Werkzeugübergabestellung bewegt und sich die damit verbundene Kopplung des Werkzeugträgers mit der Spindeleinheit dann löst, wenn sich diese in ihre zurückgezogene Ausgangsstellung zurückbewegt.

Grundsätzlich kann der Werkzeugträger in verschidenster Weise mit den Armen verbunden sein.

So ist es möglich, daß der Werkzeugträger entweder starr oder um eine horizontal und senkrecht zu den Spindelachsen, oder um eine parallel zu den Spindelachsen ausgerichtete Achse drehbar mit den Armen verbunden ist.

Eine starre Verbindung des Werkzeugträgers mit den Armen hatden Vorteil, daß keinerlei Lagenungen und Antriebe für den Werkzeugträger vorgesehen werden müssen. Allerdings ist es in einem solchen Falle erforderlich, zwei Anschlaglagen vorzusehen, wobei in der einen Anschlaglage die gebrauchten Werkzeuge von den Bearbeitungsspindeln an den Werkzeugträger und in der anderen Anschlaglage die Werkzeuge von dem Werkzeugträger an die Bearbeitungsspindeln übergeben werden.

Für den Fall, daß der Werkzeugträger um eine horizontale, senkrecht oder parallel zu den Spindelachsen verlaufende Achse drehbar an den Armen gelagert ist, muß lediglich eine einzige Anschlaglage vorgesehen werden, in der sowohl die Übergabe der gebrauchten Werkzeuge, als auch die Übernahme der neuen Werkzeuge erfolgte.

Grundsätzlich können die Werkzeugträger in der verschiedensten Weise gestaltet sein. Besondes vorteilhaft ist es jedoch, die Werkzeugträger in Form von Platten, Rahmen oder dergleichen auszubilden, in denen Aufnahmeöffnungen für die Werkzeuge vorgesehen sind.

Zur Verringerung der für das Verschwenken der Arme notwendigen Antriebskräfte ist es zweckmäßig, daß die Arme jeweils mit einem Gegengewicht oder mit einer Ausgleichsfederanordnung ausgestattet sind.

Im folgenden sind zur weiteren Erläuterung und zum besseren Verständnis drei Ausführungsbeispiele der erfindungsgemäßen Werkzeugwechseleinrichtung unter Bezugnahme auf die beigefügten Zeichnungen näher beschrieben.
Fig. 1 zeigt schematisch in einer perspektivischen Gesamtansicht eine auf einer Seiteneinheit einer Transfermaschine (nicht dargestellt) angeordnete Vielspindelwerkzeugmaschine, welche mit einer Werkzeugwechseleinrichtung der erfindungsgemäßen Art ausgestattet ist,
Fig. 2 bis 7 zeigen schematisch zur Erläuterung der Wirkungsweise der Werkzeugwechseleinrichtung gemäß Fig. 1 sechs Phasen des Werkzeugwechsels, jeweils in einer Seitenansicht,
Fig. 8 und 9 zeigen ein zweites Ausführungsbeispiel einer erfindungsgemäßen Werkzeugwechseleinrichtung in zwei Phasen, und
Fig. 10 und 11 zeigen ein drittes Ausführungsbeispiel einer erfindungsgemäßen Werkzeugwechseleinrichtung in zwei Phasen.

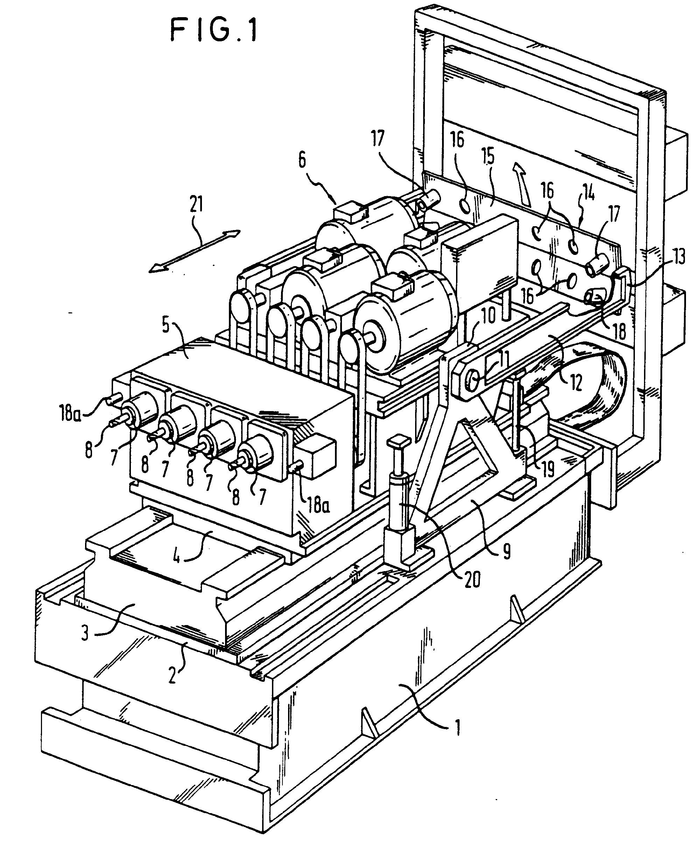

Bei dem in Fig. 1 dargestellten Ausführungsbeispiel ist auf der Oberseite einer Seiteneinheit 1 einer Transfermaschine eine zwischenplattenförmige Anpaßeinheit 2 angeordnet. Diese Anpaßeinheit 2 trägt auf ihrer Oberseite eine Schlitteneinheit 3, auf deren Schlitten 4 eine Spindeleinheit 5 mit ihren Antriebselementen 6 angeordnet ist. Die Spindeleinheit 5 weist im vorliegenden Ausführungsbeispiel vier Bearbeitungsspindeln 7 auf, die jeweils mit einem Werkzeug 8 bestückt sind.

Zu beiden Seiten der Spindeleinheit 5 und den Antriebselementen 6 sind auf der Oberseite der zwischenplattenförmigen Anpaßeinheit 2 Lagerböcke 9 angeordnet, die im Bereich ihres oberen Endes 10 eine Lagerung 11 für das eine Ende von Armen 12 tragen, an deren freien Enden 13 ein Werkzeugträger 14 befestigt ist. Der Werkzeugträger 14 ist im vorliegenden Fall als Platte 15 ausgebildet, die mit Aufnahmeöffnungen 16 für die Werkzeuge 8 ausgestattet ist.

Im vorliegenden Fall sind in der Platte 15 übereinander zwei Reihen von Aufnahmeöffnungen 16 vorgesehen. Der Mittenabstand zwischen den Aufnahmeöffnungen 16 entspricht dabei genau dem Mittenabstand der Werkzeuge 8 bzw. der Bearbeitungsspindeln 7.

Außerhalb derAufnahmeöffnungen 16jeder Reihe sind in der Platte 15 Führungsbüchsen 17 und 18 angeordnet, in die - wie später noch erläutert werden wird - seitlich an der Spindeleinheit 5 angeordnete Führungsstangen 18a eingeschoben werden können.

Die Lagerböcke 9 sind mit Anschlägen 19 und 20 ausgestattet, auf denen die Arme 12 in der jeweiligen Stellung aufruhen. Während der Anschlag 19 eine vorbestimmte feste Höhe aufweist, besitzt der Anschlag 20 zwei wahlweise einstellbare Anschlaglagen, nämlich eine erste obere und eine zweite untere Anschlaglage.

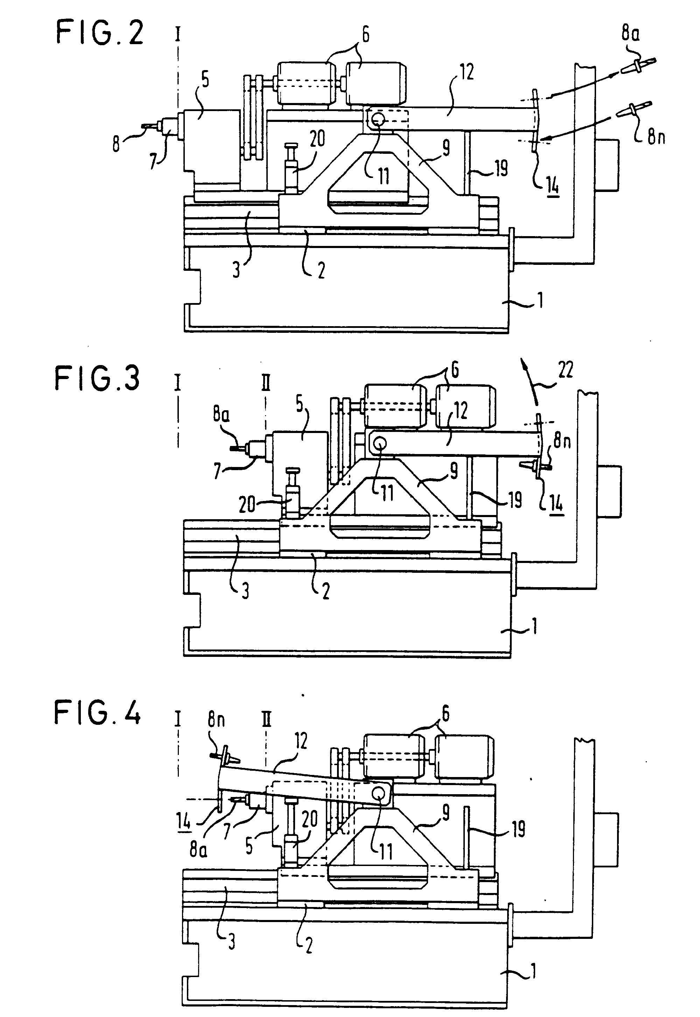

Für das Venchwenken der Arme 12 um die Lagerung 11 ist ein Schwenkantrieb vorgesehen, der im vorliegenden Ausführungsbeispiel der Übersichtlichkeit halber nicht dargestellt ist. Mittels dieses Schwenkantriebes können die Arme 12 (und damit auch der Werkzeugträger 14) aus der in den Fig. 1, 2, 3 bzw. 7 gezeigten Bestückungsstellung in die in den Fig. 4 und 5 bzw. 6 dargestellte Wechselstellung verschwenkt werden.

Nicht dargestellt ist ferner ein Antrieb, mit welchem die Spindeleinheit 5 einschließlich ihrer Antriebselemente 6 über den Schlitten 4 auf der Schlitteinheit 3 in Richtung des Pfeiles 21 hin- und herbewegt werden kann. Für diese Hin- und Herbewegung sind im folgenden lediglich drei Stellungen von Bedeutung, die in den Fig. 2 bis 7 mit den römischen Ziffern 1 bis 111 gekennzeichnet sind.

Stellung I kennzeichnet die Bearbeitungsstellung, in der das nicht dargestellte Werkstück mit den in den Bearbeitungsspindeln 7 eingespannten Werkzeugen 8 bearbeitet wird,

Stellung 11 kennzeichnet die zurückgezogene Ausgangsstellung, in der die Spindeleinheit 5 mit ihren Antriebselementen 6 auf der Schlitteneinheit 3 derart weit zurückgefahren ist, daß der mit neuen Werkzeugen bestückte Werkzeugträger 14 ungehindertvordie Bearbeitungsspindeln 7 und deren Werkzeuge 8 geschwenkt werden kann,

Stellung 111 kennzeichnet die Werkzeugübergabestellung, bei der-wie später noch erläutert werden wird - die auszuwechselnden Werkzeuge 8a an den Werkzeugträger 14 übergeben und die neuen Werkzeuge 8n von den Werkzeugspindeln 7 übernommen werden.

Der automatische Werkzeugwechselvorgang läuft nun mit einer Werkzeugwechseleinrichtung der erfindungsgemäßen Art wie folgt ab :

Wie aus Fig. 2 hervorgeht, befindet sich die Spindeleinheit 5 in der Bearbeitungsstellung 1 und führt dort an einem nicht dargestellten Werkzeug den vorgegebenen Bearbeitungsvorgang aus. In dieser Phase befindet sich der Werkzeugträger 15 in seiner Bestückungsstellung auf der Rückseite der Werkzeugmaschine, in der die Arme 12 auf dem Anschlag 19 aufruhen.

Während die Bearbeitungseinheit 5 über die Bearbeitungsspindeln 7 mit den Werkzeugen 8 die vorgegebenen Bearbeitungsvorgänge durchführen, werden von der Rückseite der Werkzeugmaschine her aus dem Werkzeugträger 14 die bereits gebrauchten Werkzeuge 8a entnommen und der Werkzeugträger mit neuen Werkzeugen 8n bestückt. Wie mit Pfeilen in Fig. 2 angedeutet, befanden sich die gebrauchten Werkzeuge 8a in der oberen Reihe der Aufnahmeöffnungen 16(Fig. 1), während die neuen Werkzeuge 8n in die untere Reihe eingesetzt werden. Ist dieser Vorgang abgeschlossen, so ist die obere Reihe des Werkzeugträgers 15 leer und die untere Reihe mit neuen Werkzeugen 8n bestückt, wie dies in Fig. 3 dargestellt ist.

Soll nun ein Werkzeugwechsel vorgenommen werden, so wird die Spindeleinheit 5 in die zurückgezogene Ausgangsstellung 11 zurückgeführt, wie dies ebenfalls aus Fig. 3 ersichtlich ist. Hat die Spindeleinheit 5 die Ausgangsstellung 11 erreicht, so wird der Schwenkantrieb für die Arme 12 in Tätigkeit gesetzt und der Werkzeugträger 14 in Richtung des Pfeiles 22 soweit geschwenkt, bis die Arme 12 auf dem Anschlag 20 aufliegen, wie dies in Fig. 4 dargestellt ist. In dieser Phase befindet sich der Anschlag 20 in seiner ersten oberen Anschlaglage, in der die Werkzeuge 8a in den Bearbeitungsspindeln 7 grob mit der in dieser Stellung leeren unteren Reihe der Aufnahmeöffnungen ausgerichtet sind.

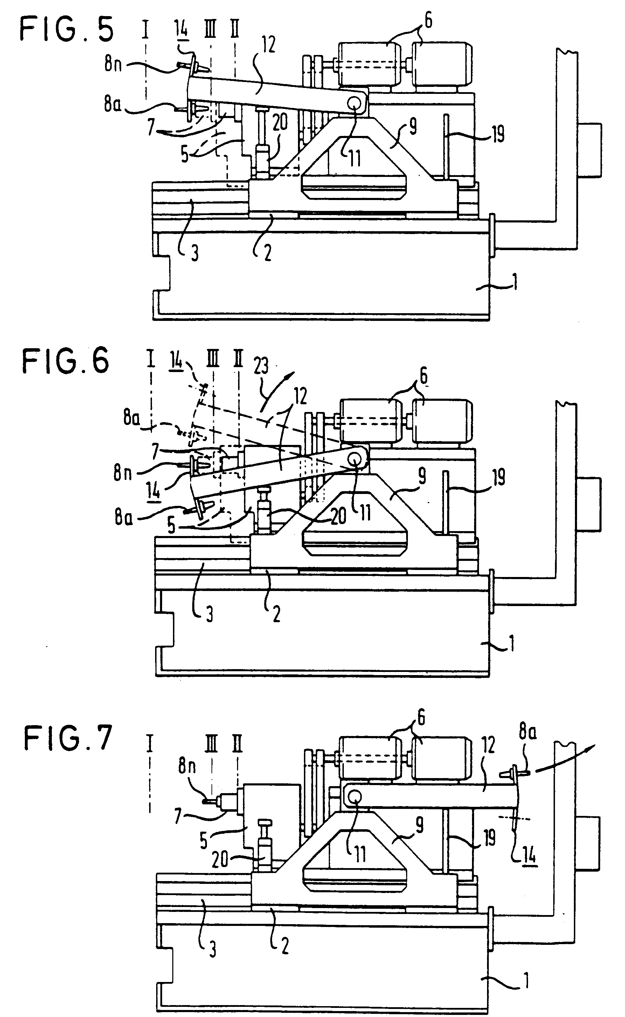

Ist dies erfolgt, so verfährt die Spindeleinheit 5 zusammen mit ihren Antriebselementen 6 aus der zurückgezogenen Ausgangsstellung II, die in Fig. 5 mit gestrichtelten Linien dargestellte Werkzeugübergabestellung 111, in der die Bebrauchten Werkzeuge 8a durch nicht dargestellte Einrichtungen in den Aufnahmeöffnungen des Werkzeugträgers 14 festgehalten werden. Der Spannmechanismus in den Bearbeitungsspindeln 7 gibt dann die Werkzeuge 8a frei, so daß die Spindeleinheit und damit die Bearbeitungsspindeln ohne die Werkzeuge 8a in die zurückgezogene Ausgangsstellung 11 zurückkehren kann. Diese Phase des Werkzeugwechsels ist ebenfalls in Fig. 5 dargestellt.

Sobald sich die Spindeleinheit 5 in der zurückgezogenen Ausgangsstellung II befindet, wird der Anschlag 20 in seine zweite untere Anschlaglage verfahren, d. h. im vorliegenden Fall soweit abgesenkt, bis die Achsen der nunmehr leeren Bearbeitungsspindeln mit den Achsen der in der oberen Aufnahmeöffnungsreihe ruhenden neuen Werkzeugen 8n fluchten. Ist diese Stellung erreicht, so fährt die Spindeleinheit 5 aus der zurückgezogenen Ausgangsstellung 11 in die Werkzeugübergabestellung 111, wie dies in Fig. 6 dargestellt ist. Die Spanneinrichtungen der Bearbeitungsspindeln werden betätigt und erfassen die neuen Werkzeuge 8n, die in der oberen Aufnahmeöffnungsreihe des Werkzeugträgers 14 ruhen. Sobald die neuen Werkzeuge 8n durch die Bearbeitungsspindeln erfaßt sind, wird die Spindeleinheit aus der Werkzeugübergabestellung III in die Ausgangsstellung II zurückgezogen, wodurch die neuen Werkzeuge 8n aus dem Werkzeugträger 14 herausgezogen werden. Dieser kann dann - wie in Fig. 6 mit getrichtelten Linien dargestellt- in Richtung des Pfeiles 23 zurück in die in Fig. 7 dargestellte Bestückungsstellung auf den Anschlägen 19 zurückgeschwenkt werden.

Im Anschluß daran wird die mit neuen Werkzeugen 8n bestückte Spindeleinheit 5 wieder in die Bearbeitungsstellung I verschoben, um dort den nächsten Bearbeitungsvorgang durchzuführen. Während dieses Bearbeitungsvorganges werden - wie bereits im Zusammenhang mit Fig. 2 beschrieben - die gebrauchten Werkzeuge 8a aus dem Werkzeugträger 14 herausgenommen und die in dieser Stellung untere Reihe der Aufnahmeöffnungen mit neuen Werkzeugen 8n bestückt.

Wie im vorangegangenen zu den Fig. 4 bis 6 beschrieben, erfolgt die Grobausrichtung des Werkzeugträgers gegenüber den Bearbeitungsspindeln in der Wechselstellung über die Anschläge 20, welche zur Übergabe der Bebrauchten Werkzeuge 8a an den Werkzeugträger die in Fig. 4 dargestellte erste obere Anschlaglage und zur Übernahme der neuen Werkzeuge 8n von dem Werkzeugträger zu den BearbeitunBsspindeln die in Fig. 6 dargestellte zweite untere Anschlaglage einnimmt. Da diese Ausrichtung durch die Anschläge 20 bei vertretbarem mechanischen Aufwand nicht die für eine präzise Übergabe notwendige Genauigkeit aufweist, sind korespondierende Führungseinrichtungen vorgesehen, die einerseits am Werkzeugträger und andererseits an der Spindeleinheit befestigt sind. Diese Führungseinrichtungen bestehen im vorliegenden Ausführungsbeispiel aus den seitlich neben den Aufnahmeöffnungen 16 am Werkzeugträger 14 angeordneten Führungsbüchsen 17 und 18, sowie Führungsstangen 18a, die seitlich an der Spindeleinheit 5 angeordnet sind. Die Lage der Führungsbüchsen 17 und 18 am Werkzeugträger 14 sowie der Führungsstangen 18a an der Spindeleinheit 5 ist derart gewählt, daß die Aufnahmeöffnungen 16 der oberen Reihe (vgl. Fig. 1) in bezug auf ihr Zentrum genau mit den Achsen der Bearbeitungsspindeln 7 fluchten, wenn die Führungsstangen 18a in die Bohrungen der Führungsbüchsen 17 eingeschoben sind. Die Aufnahmeöffnungen 16 der unteren Reihe des Werkzeugträgers 14 (vgl. Fig. 1) wiederum fluchten genau mit den Achsen der Bearbeitungsspindeln 7, wenn die Führungsstangen 18a in den Bohrungen der Führungsbüchsen 18 ruhen.

Die Führungsbüchsen 17 und 18 sowie die Führungsstangen 18a sind in ihrer Länge und Lage nun derart bemessen, daß sie in der zurückgezogenen Ausgangsstellung II keinerlei Verbindung miteinander haben. Wird dagegen die Spindeleinheit 5 aus der zurückgezogenen Ausgangsstellung II in die Werkzeugübergabestellung III verschoben, so dringen die Führungsstangen 18a entsprechend der jeweils durch die Anschläge 20 über die Arme 12 vorgenommenen Grobausrichtung entweder in die Führungsbüchsen 17 oder die Führungsbüchsen 18 ein, wodurch mit relativ geringem konstruktivem Aufwand eine äußerst präzise Feinausrichtung des Werkzeugträgers gegenüber den Bearbeitungsspindeln erzielt wird.

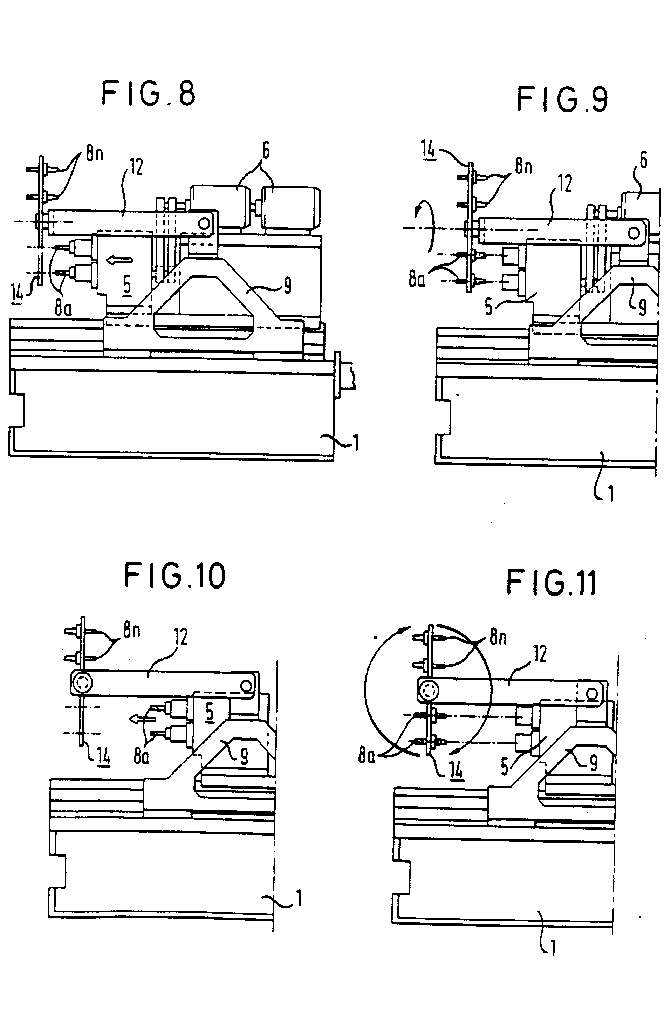

Bei dem in den Fig. 1 bis 7 dargestellten Ausführungsbeispiel ist der Werkzeugträger 14 starr mit den Armen 12 verbunden. In den Fig. 8 bis 11 sind nun zwei Ausführungsbeispiele dargestellt, bei denen der Werkzeugträger 14 drehbar mit den Armen 12 verbunden ist.

Im Falle der Ausführungsform nach den Fig. 8 und 9 verläuft die Drehachse des Werkzeugträgers parallel zu den Spindelachsen, während sie im Falle des Ausführungsbeispiels nach den Fig. 10 und 11 horizontal und senkrecht zu den Spindelachsen ausgerichtet ist.

In beiden Ausführungsbeispielen wird nun der Werkzeugträger 14 in der nicht dargestellten Bestückungsstellung auf der Rückseite der Werkzeugmaschine derart beschickt. daß nach dem Verschwenken der Arme 12 in die Wechselstellung gemäß den Fig. 8 und 10 jeweils die leeren Aufnahmeöffnungen des Werkzeugträgers vor den Bearbeitungsspindeln mit den darin gehalterten auszuwechselnden Werkzeugen 8a zu liegen kommen. Durch Verschieben aus der zurückgezogenen Ausgangsstellung in die Werkzeugübergabestellung werden dann die auszuwechselnden Werkzeuge 8a - wie oben zum ersten Ausführungsbeispiel bereits beschrieben - an den Werkzeugträger 14 übergeben. Im Anschluß daran wird die Spindeleinheit wieder in die zurückgezogene Ausgangsstellung zurückgeführt, wie dies in den Fig. 9 bzw. 11 dargestellt ist.

Im Gegensatz zum ersten Ausführungsbeispiel werden nunmehr die im Werkzeugträger 14 befindlichen neuen Werkzeuge 8n nicht durch Absenken der Arme 12, sondern durch Drehen des Werkzeugträgers 14 um die jeweilige Achse vor die leeren Bearbeitungsspindeln 7 gedreht, wie dies in den Fig. 9 bzw. 11 mit Pfeilen angedeutet ist. Haben die neuen Werkzeuge 8n ihre Lage vor den leeren Bearbeitungsspindeln 7 erreicht, so wird die Spindeleinheit 5 aus der zurückgezogenen Ausgangsstellung wieder in die Werkzeugübergabestellung verschoben und nimmt in dieser in der bereits beschriebenen Weise die neuen Werkzeuge 8n auf. Durch Zurückziehen der Spindeleinheit werden dann die neuen Werkzeuge 8n aus dem Werkzeugträger 14 herausgezogen, so daß der Werkzeugträger wieder in seine Beschickungsstellung auf der Rückseite der Werkzeugmaschine zurückgeschwenkt werden kann.

Auch bei den in den Fig. 8 bis 11 dargestellten Ausführungsbeispielen erfolgt in der Wechselstellung eine Grobausrichtung der Arme 12 durch Anschläge (nicht dargestellt) und eine Feinausrichtung durch Führungseinrichtungen in Form von Führungsstangen und Führungsbüchsen.

Während im Falle derAusführungsbeispiele nach den Fig. 1 bis 9 die Beschickung der Werkzeugträger in der Beschikungsstellung stets von innen nach außen, d. h. von der Rückseite der Werkzeugmaschine durch den Werkzeugträger hindurch zur Bedienungsperson hin erfolgen muß, kann der Werkzeugträger im Falle des Ausführungsbeispieles nach den Fig. 10 und 11 direkt von hinten bestückt werden. Dies ist darauf zurückzuführen, daß der Werkzeugträger im Falle des Ausführungsbeispieles nach den Fig. 10 und 11 um eine senkrecht zu den Spindelachsen ausgerichtete Achse verschwenkt wird, wodurch die Werkzeuge einen Wendevorgang um 180° erfahren, wie dies aus Fig. 11 zu ersehen ist.

Werkzeugwechseleinrichtungen, wie sie in den Ausführungsbeispielen gemäß den Fig. 8 bis 11 beschrieben sind, haben den Vorteil, daß sie auch bei solchen Werkzeugmaschinen eingesetzt werden können, die übereinander zwei oder mehr Reihen von Bearbeitungsspindeln aufweisen. In solchen Fällen ist es nämlich aus Platzgründen nicht möglich, den Werkzeugträger 14 starr mit den Armen zu befestigen, da zum Absenken von der oberen in die untere Anschlaglage nicht genügend Raum zur Verfügung steht.

## Patentansprüche

1. WerkzeugmaschinezurAnordnungaufeinerSeiten- oder Konsoleinheit (1) einer Transfermaschine, mit einer Spindeleinheit (5) mit einer Anzahl von Bearbeitungsspindeln (7), mit Antriebselementen (6) für die Spindeleinheit sowie einer Werkzeugwechseleinrichtung, welche einen Werkzeugträger (14) zur Aufnahme der gebrauchten und der neuen Werkzeuge (8a, 8) aufweist, der aus einer Bestückungsstellung in eine Wechselstellung vor den Bearbeitungsspindeln bewegbar ist,
dadurch gekennzeichnet,
daß der Werkzeugträger (14) an den freien Enden (13) von zwei jeweils an den Seiten der Werkzeugmaschine angeordneten Armen (12) befestigt ist, deren andere Enden um eine waagerechte, senkrecht zu den Achsen der Bearbeitungsspindeln (7) verlaufende Achse derart verschwenkbar sind, daß der Werkzeugträger (14) aus einer Bestückungsstellung auf der Rückseite der Werkzeugmaschine über deren Spindeleinheit (5) und die zugehörigen Antriebselemente (6) hinweg in die Wechselstellung vor den Bearbeitungsspindeln (7) bewegbar ist.

2. Werkzeugmaschine nach Anspruch 1,
dadurch gekennzeichnet, daß die verschwenkbare Lagerung (11) der Arme (12) in jeweils neben der Werkzeugmaschine angeordneten Lagerböcken (9) vorgesehen ist.

3. Werkzeugmaschine nach Anspruch 2,
dadurch gekennzeichnet, daß die Lagerböcke (9) über eine zwischenplattenförmige Anpaßeinheit (2) auf der Oberseite der Seiten oder Konsoleinheit (1) befestigt sind.

4. Werkzeugmaschine nach den Ansprüchen 1 oder 2,
dadurch gekennzeichnet, daß jeder Arm (12) einen eigenen Schwenkantrieb aufweist, und daß die Schwenkantriebe über eine starre Welle miteinander verbunden sind.

5. Werkzeugmaschine nach den Ansprüchen 2 oder 3,
dadurch gekennzeichnet, daß zur Grobausrichtung der Werkzeugträgers (14) in der Wechselstellung an den Lagerböcken (9) einstellbare Anschläge (20) vorgesehen sind, die mit Anschlagflächen an den Armen (12) zusammenwirken.

6. Werkzeugmaschine nach einem derAnsprüche 1 und 5,
dadurch gekennzeichnet, daß zur Feinausrichtung der Werkzeugträgers (14) in der Wechseistellung miteinander korrespondierende Führungseinrichtungen vorgesehen sind, die einerseits an dem Werkzeugträger (14) und andererseits an der Spindeleinheit (5) befestigt sind.

7. Werkzeugmaschine nach Anspruch 6, dadurch gekennzeichnet, daß die Führungseinrichtung Führungsstangen (18a) umfaßt, die mit Führungsbüchsen (17 bzw. 18) zusammenwirken.

8. Werkzeugmaschine nach Anspruch 7,
dadurch gekennzeichnet, daß die Führungsstangen (18a) an der Seite der Spindeleinheit (5) parallel zu den Spindeln (7) angeordnet und derart bemessend sind, daß die sie in der Werkzeugübergabestellung in die in dem Werkzeugträger angeordneten Führungsbüchsen (17 bzw. 18) hineinragen.

9. Werkzeugmaschine nach einem oder mehreren derAnsprüche 1 bis 8, dadurch gekennzeichnet, daß der Werkzeugträger (14) starr mit den Armen (12) verbunden ist.

10. Werkzeugmaschine nach einem oder mehreren der Ansprüche 1 bis 8 dadurch gekennzeichnet, daß der Werkzeugträger (14) um eine horizontal und senkrecht zu den Spindelachsen ausgerichtete Achse drehbar mit den Armen (12) verbunden ist (Fig. 10 und 11).

11. Werkzeugmaschine nach einem oder mehreren der Ansprüche 1 bis 8 dadurch gekennzeichnet, daß der Werkzeugträger (14) um eine parallel zu den Spindelachsen verlaufende Achse drehbar an den Armen (12) befestigt ist (Fig. 8 und 9).

12. Werkzeugmaschine nach einem oder mehreren derAnsprüche 1 bis 11 dadurch gekennzeichnet, daß der Werkzeugträger (14) als Platte (15), Rahmen oder dergleichen ausgebildet und mit Aufnahmeöffnungen (16) für die Werkzeuge (8a bzw. 8n) ausgestattet ist.

13. Werkzeugmaschine nach den Ansprüchen 10 oder 11, dadurch gekennzeichnet, daß der Werkzeugträger (14) über einen separaten Antrieb um die Achse drehbar ist.

14. Werkzeugmaschine nach den Ansprüchen 1, 2 oder 4, dadurch gekennzeichnet, daß die Arme (12) jeweils mit einem Gegengewicht ausgestattet sind.

15. Werkzeugmaschine nach den Ansprüchen 1, 2 oder 4 dadurch gekennzeichnet, daß die Arme (12) jeweils mit einer Ausgleichsfederanordnung ausgestattet sind.

## Claims

1. Machine tool for arrangement on a wing base or knee-type unit (1) of a transfer machine, with a spindle unit (5) with a number of machining spindles (7), with drive elements (6) for the spindle unit, as well as a tool changing device which comprises a tool support (14) for receiving the used and new tools (8a, 8), which is movable out of a fitting position into a changing position in front of the machining spindles, characterised in that the tool support (14) is attached to the free ends (13) of two arms (12) which are each arranged on the sides of the machine tool and of which the other ends are pivotable about a horizontal axis extending perpendicularly to the axes of the machining spindles (7), in such a way that the tool support (14) is movable out of a fitting position on the rear side of the machine tool beyond the spindle unit (5) thereof and the associated drive elements (6) into the changing position in front of the machining spindles (7).

2. Machine tool according to claim 1, characterised in that the pivotable mounting (11) of the arms (12) is provided in each case in bearing blocks (9) arranged adjacent to the machine tool.

3. Machine tool according to claim 2, characterised in that the bearing blocks (9) are mounted by an intermediate plate-like adapter unit (2) on the upper side of the wing base or knee-type unit (1).

4. Machine tool according to claim 1 or 2, characterised in that each arm (12) comprises its own pivot drive and in that the pivot drives are connected to each other by a rigid shaft.

5. Machine tool according to claim 2 or 3, characterised in that for rough alignment of the tool support (14) in the changing position, on the bearing blocks (9) are provided adjustable stops (20) which cooperate with stop faces on the arms (12).

6. Machine tool according to either of claims 1 and 5, characterised in that for fine alignment of the tool support (14) in the changing position, guide means corresponding to each other are provided, which are attached on the one hand to the tool support (14) and on the other hand to the spindle unit (5).

7. Machine tool according to claim 6, characterised in that the guide means comprises guide rods (18a) which cooperate with guide bushes (17 or 18).

8. Machine tool according to claim 7, characterised in that the guide rods (18a) on the side of the spindle unit (5) are arranged parallel to the spindles (7) and have dimensions such that in the tool transfer position they extend into the guide bushes (17 or 18) arranged in the tool support.

9. Machine tool according to one or more of claims 1 to 8, characterised in that the tool support (14) is rigidly connected to the arms (12).

10. Machine tool according to one or more of claims 1 to 8, characterised in that the tool support (14) is connected to the arms (12) so as to rotate about an axis oriented horizontally and perpendicularly to the spindle axes (Figs. 10 and 11).

11. Machine tool according to one or more of claims 1 to 8, characterised in that the tool support (14) is attached to the arms (12) so as to rotate about an axis extending parallel to the spindle axes (Figs. 8 and 9).

12. Machine tool according to one or more of claims 1 to 11, characterised in that the tool support (14) is constructed as a plate (15), frame or the like and provided with holding openings (16) for the tools (8a or 8n).

13. Machine tool according to claim 10 or 11, characterised in that the tool support (14) is rotatable by a separate drive about the axis.

14. Machine tool according to claim 1, 2 or 4, characterised in that the arms (12) are each provided with a counterweight.

15. Machine tool according to claim 1, 2 or 4, characterised in that the arms (12) are each provided with a compensating spring assembly.

## Revendications

1. Machine-outil disposée sur une unité latérale ou de console (1) d'une machine de transfert et comprenant une unité de broches (5) avec un certain nombre de broches d'usinage (7), des éléments moteurs (6) pour l'unité de broches, ainsi qu'un dispositif de changement d'outils qui présente un porte-outils (14) destiné à recevoir les outils usagés (8a) et les nouveaux outils (8n) qui peut être déplacé d'une position de chargement dans une position de changement devant les broches d'usinage, caractérisé en ce que le porte-outils (14) est monté à l'extrémité libre de deux bras placés sur les côtés de la machine-outil, dont l'autre extrémité peut pivoter autour d'un axe horizontal perpendiculaire aux axes des broches, de manière telle que ledit porte-outils peut être déplacé de sa position de chargement sur le côté arrière de la machine-outil, en passant par-dessus l'unité de broches (5) et les éléments moteurs (6) de cette dernière, dans la position de changement devant les broches d'usinage (7).

2. Machine-outil selon la revendication 1, caractérisée en ce que le montage pivotant (11) des bras (12) est prévu dans des supports (9) disposés à côté de la machine-outil.

3. Machine-outil selon la revendication 2, caractérisée en ce que les supports (9) sont fixés par l'intermédiaire d'une unité d'adaptation (2) en forme de plaque intermédiaire sur le côté supérieur de l'unité latérale ou de console (1).

4. Machine-outil selon la revendication 1 ou 2, caractérisée en ce que chaque bras (12) présente une commande de pivotement propre et en ce que les commandes de pivotement sont reliées entre elles par un arbre rigide.

5. Machine-outil selon la revendication 2 ou 3, caractérisée en ce que pour l'orientation approximative du porte-outils (14) dans la position de changement, il est prévu sur les supports (9) des butées réglables (20) qui coopèrent avec des surfaces de butée sur les bras (12).

6. Machine-outil selon l'une des revendications 1 et 5, caractérisée en ce que pour l'orientation précise du porte-outils (14) dans la position de changement, il est prévu des dispositifs de guidage correspondant les uns aux autres qui sont fixés d'une part sur le porte-outils (14) et d'autre part sur l'unité de broches (5).

7. Machine-outil selon la revendication 6, caractérisée en ce que le dispositif de guidage comprend des barres de guidage (18a) qui coopèrent avec des douilles de guidage (17 et 18).

8. Machine-outil selon la revendication 7, caractérisée en ce que les barres de guidage (18a) sont disposées sur le côté de l'unité de broches (5) parallèlement aux broches (7) et dimensionnées de telle sorte que, dans la position du transfert des outils, elles pénètrent dans les douilles de guidage (17 et 18) disposées dans de porte-outils.

9. Machine-outil selon l'une des revendications 1 à 8, caractérisée en ce que le porte-outils (14) est relié rigidement aux bras (12).

10. Machine-outil selon l'une des revendications 1 à 8, caractérisée en ce que le porte-outils (14) est relié au bras (12) de manière à pouvoir effectuer une rotation autour d'un axe orienté horizontalement et perpendiculairement aux axes des broches (figures 10 et 11).

11. Machine-outil selon l'une des revendications 1 à 8, caractérisée en ce que le porte-outils (14) est fixé sur les bras (12) de manière à pouvoir effectuer une rotation autour d'un axe s'étendant parallèlement aux axes des broches (figures 8 et 9).

12. Machine-outil selon l'une des revendications 1 à 11, caractérisée en ce que le porte-outils (14) est réalisé sous forme de plaque (15), de cadre ou analogue et est équipé d'ouvertures de réception (16) pour les outils (8a et 8n).

13. Machine-outil selon la revendication 10 ou 11, caractérisée en ce que le porte-outils (14) peut effectuer une rotation autour de l'axe par l'intermédiaire d'un dispositif de commande séparé.

14. Machine-outil selon la revendication 1, ou 4, caractérisée en ce que les bras (12) sont chacun équipés d'un contre-poids.

15. Machine-outil selon la revendication 1, ou 4, caractérisée en ce que les bras (12) sont chacun équipés d'un dispositif de ressort compensateur.
